# EUROPEAN PATENT APPLICATION

(11) **EP 4 138 269 A1**
(43) Date of publication of application: **22.02.2023**
(21) Application number: 20931382.4
(22) Date of filing: 16.04.2020
(51) Int. Cl.: H02K 1/16, H02K 3/12, H02K 3/28, H02K 15/04, H02K 11/38

(54) **STATOR AND ROTARY ELECTRIC APPARATUS COMPRISING SAME**

(71) Applicant: LG Magna e-Powertrain Co., Ltd., Seo-gu, Incheon 22744 (KR)
(72) Inventor: SONG, Jeonghyun, Seoul 06772 (KR); AHN, Donggyun, Seoul 06772 (KR); YU, Yongsun, Seoul 06772 (KR); GONG, Yeongpil, Seoul 06772 (KR)
(74) Representative: Vossius & Partner Patentanwälte Rechtsanwälte mbB
(86) International application number: PCT/KR2020/005069
(87) International publication number: WO 2021/210704

(57) **Abstract**

The present invention relates to a stator and a rotary electric apparatus comprising same. Multiple conductors constituting each of multiple parallel circuits are formed to be two types of hairpins having different slot pitches, namely a long slot pitch and a short slot pitch, and the conductors of the two types of hairpins are alternately arranged along the circumferential direction on every layer and are wired in intersecting directions. Therefore, the multiple conductors constituting each parallel circuit are evenly distributed in every slot and every layer so as to form a balanced parallel circuit, thereby, due to the balanced parallel circuit, enabling each parallel circuit to have the same interlinkage magnetic flux and enabling an electric current to flow along the multiple parallel circuits in balance.

## Description

### Technical Field

The present disclosure relates to a stator capable of allowing a current to flow in a balanced manner in a parallel circuit and a rotary electric apparatus having the same.

### Background Art

A drive motor used as a power source for an eco-friendly vehicle includes a stator that generates a magnetic flux, a rotor that is disposed with a predetermined gap inside the stator to perform a rotational movement, and a permanent magnet provided in the rotor.

The stator includes a stator coil disposed with a plurality of slots on an inner peripheral side of a stator core, and stator coils wound in the slots. When an alternating current is applied to the stator coil, a rotating magnetic field is generated in the stator, and a rotating torque is generated in the rotor by the rotating magnetic field.

A hairpin-type motor winding method may be classified into a lap winding in which a circuit is configured in a parallel structure, a wave winding in which a circuit is configured in a series structure, and a lap-winding and wave-winding mixed winding with parallel and series structures according to a shape in which the coil is wound.

Meanwhile, in order to minimize a loss of the motor, the coils of each phase may be configured to be divided into parallel circuits.

The coils of the parallel circuits may be configured to be divided into the same number of conductors for each slot or for each layer.

However, in the related art, as the number of parallel circuits increases, there is a problem in that connection wiring becomes more complicated.

In addition, when a current flowing in each parallel circuit is configured to be unbalanced, motor winding in the related art has the following problems.

First, an amount of interlinkage magnetic flux in a coil of each parallel circuit is varied.

Second, there is a problem in that a difference in impedance occurs for each coil of each parallel circuit. This problem becomes more pronounced as the speed increases.

Third, there is a problem in that a coil is damaged due to a heat generation phenomenon in the coil due to a current flowing in a biased manner to any one parallel circuit.

Fourth, motor control may be controlled only when a current flows equally in a parallel circuit for each phase, but when an unbalanced current flows, there occurs a problem in that it is difficult to control. Such a problem occurs conspicuously in a high-speed region.

Fifth, the magnitude of a current is related to a torque, and when an unbalanced current flows, the torque is also generated in an unbalanced manner, resulting in electromagnetic noise and vibration.

### Disclosure of Invention

### Technical Problem

An aspect of the present disclosure is to provide a stator for a rotary electric apparatus having a simple wiring structure that allows a current to flow in each parallel circuit in a balanced manner even when the number of parallel circuits increases, thereby solving problems such as a heat generation phenomenon in a specific coil.

### Solution to Problem

In order to achieve the objectives, a stator may include a stator core in which a plurality of slots for each pole and each phase are disposed to pass therethrough in an axial direction; a stator coil wound around the stator core by connecting a plurality of conductors accommodated in the plurality of slots; a first layer to an N-th layer extending from an innermost side to an outermost side of the slot in a radial direction to accommodate the plurality of conductors, respectively, wherein the stator coil is configured with a plurality of parallel circuits for each pole and each phase, and the plurality of parallel circuits are configured to include a plurality of first conductors that constitute one of two parallel circuits, which are paired with each other, both sides of which are alternately accommodated in two slots, respectively, to be spaced apart at different slot pitches along a circumferential direction of the stator core and connected to one another; and a plurality of second conductors that constitute the other one of the two parallel circuits, both sides of which are alternately accommodated in two slots, respectively, at different slot pitch intervals along the circumferential direction and connected to one another.

According to an example associated with the present disclosure, the first conductor and the second conductor may be connected in parallel to constitute a pair at a 1-slot pitch interval from each other in a circumferential direction, wherein both sides of the first conductor are connected to be spaced apart by alternating a preset first slot pitch interval and a second slot pitch interval that is a 2-slot pitch shorter than the first slot pitch interval, and both sides of the second conductor are connected to be spaced apart by alternating the second slot pitch interval and the first slot pitch interval.

According to an example associated with the present disclosure, the first slot pitch may be a 7-slot pitch, and the second slot pitch may be a 5-slot pitch.

According to an example associated with the present disclosure, the first conductor and the second conductor may be respectively provided in plurality and connected in series, and a plurality of the first conductors or a plurality of the second conductors may be spaced apart from each other at a 6-slot pitch interval.

According to an example associated with the present disclosure, the first conductor and the second conductor may be wound through two slots for each pole and each phase.

According to an example associated with the present disclosure, both sides of each of the plurality of conductors may be accommodated in and connected to different slots and different layers.

According to an example associated with the present disclosure, both sides of each of the plurality of conductors may be respectively accommodated in and connected to two different layers having a difference of one layer from each other in different slots.

According to an example associated with the present disclosure, the stator core may be configured with 8 poles, 48 slots, and 8 layers.

According to an example associated with the present disclosure, an even number of parallel circuits may be provided.

According to an example associated with the present disclosure, the parallel circuit may be configured with four parallel circuits, wherein a first and a second parallel circuit, which are paired with each other, among the four parallel circuits, are drawn in from an outermost N-th layer and are drawn out to an innermost first layer, and a third parallel circuit and a fourth parallel circuit, which are paired with each other, among the four parallel circuits, are drawn in from the first layer and are drawn out to the N-th layer.

According to an example associated with the present disclosure, two parallel circuits, which are paired with each other, among the plurality of parallel circuits may be respectively wound around the same layer in different slots, wherein the first conductor and the second conductor are respectively spaced apart from each other at a predetermined slot pitch interval along a circumferential direction, and both sides of each of the first conductor and the second conductor are accommodated in two radially adjacent layers of two different slots, respectively, extended in a diagonal direction between the circumferential direction and the radial direction, and connected by moving two layers in the radial direction for every one rotation in the circumferential direction.

According to an example associated with the present disclosure, each of the plurality of conductors, both sides of which are disposed to be inserted into the two different slots, may be configured as a hairpin type having the same shape for each layer.

According to an example associated with the present disclosure, each of the plurality of conductors may include a plurality of insertion portions respectively inserted into the two slots; a crossover portion connecting one end of each of the plurality of insertion portions; a plurality of bending portions extending to protrude from the other end of each of the plurality of insertion portions to an outside of the slot, and being primarily bent; and a conductive portion that is secondarily bent at each of the plurality of bending portions to electrically connect both end portions of the conductor.

According to an example associated with the present disclosure, a crossover portion of each of the first conductor and the second conductor may extend in a diagonal direction between the circumferential direction and the radial direction.

According to an example associated with the present disclosure, respective bending portions of the first conductor and the second conductor may be bent in directions crossing each other.

According to an example associated with the present disclosure, the plurality of parallel circuits may be configured to include a first parallel circuit and a second parallel circuit drawn in to an outermost N-th layer of the slot, and drawn out from an innermost first layer of the slot, and wound in a first circumferential direction while constituting a pair; and a third parallel circuit and a fourth parallel circuit drawn in to the innermost first layer of the slot, and drawn out from the outermost N-th layer of the slot, and wound in a second circumferential direction opposite to the first circumferential direction while constituting another pair.

A rotary electric apparatus according to the present disclosure may include a housing; a stator accommodated into the housing; and a rotor mounted at inside of the stator to be rotatable with respect to the stator, wherein the stator includes a stator core in which a plurality of slots for each pole and each phase are disposed to pass therethrough in an axial direction; a stator coil wound around the stator core by connecting a plurality of conductors accommodated in the plurality of slots; and a first layer to an N-th layer extending from an innermost side to an outermost side of the slot in a radial direction to accommodate the plurality of conductors, respectively, wherein the stator coil is configured with a plurality of parallel circuits for each pole and each phase, and the plurality of parallel circuits are configured to include a plurality of first conductors that constitute one of two parallel circuits, which are paired with each other, both sides of which are alternately accommodated in two slots, respectively, to be spaced apart at different slot pitches along a circumferential direction of the stator core and connected to one another; and a plurality of second conductors that constitute the other one of the two parallel circuits, both sides of which are alternately accommodated in two slots, respectively, at different slot pitch intervals along the circumferential direction and connected to one another.

### Advantageous Effects of Invention

The effects of a stator and a rotary electric apparatus having the same according to the present disclosure will be described as follows.

First, a plurality of conductors constituting each of a plurality of parallel circuits may be configured with two types of hairpin-type conductors having different slot pitches, that is, a long slot pitch and a short slot pitch, and the two types of hairpin-type conductors may be alternately arranged along a circumferential direction in all layers, and wired in directions crossing each other, thereby allowing the plurality of conductors constituting each parallel circuit to be evenly distributed in all slots and layers to constitute a balanced parallel circuit.

Therefore, according to the present disclosure, in a balanced parallel circuit, an amount of interlinkage magnetic flux of each parallel circuit may be the same, and a current may flow in a balanced manner along a plurality of parallel circuits.

Second, an impedance of each parallel circuit may be defined uniformly.

Third, a current may flow evenly to each parallel circuit, thereby solving a problem in that a heat generation phenomenon of a specific coil occurs due to the bias of the current.

Fourth, a current may flow evenly in each parallel circuit, thereby facilitating control during a high-speed operation.

Fifth, a current may flow in a balanced manner in each parallel circuit to evenly generate a torque in each parallel circuit, thereby minimizing electromagnetic noise and vibration.

Sixth, two types of hairpin-type coils having a long slot pitch and a short slot pitch may be applicable to all layers to reduce the number of types of hairpins, thereby improving productivity and reducing manufacturing cost.

Seventh, a long slot pitch and a short slot pitch, two types of hairpin-type conductors, may be identically used for each layer, thereby simplifying the structure of a coil.

Eighth, a lead wire (lead line) into which a current is drawn, a neutral wire (neutral line) from which the current is drawn, and a jump wire connecting two conductors located in different layers may be intensively arranged in any one of four sections divided into four quarters of a circumference along a circumferential direction of the stator.

### Brief Description of Drawings

FIG. 1 is a conceptual view showing a rotary electric apparatus of an 8-pole, 48-slot, 8-layer model according to the present disclosure.
FIG. 2 is a plan view showing a shape in which the rotary electric apparatus of FIG. 1 as viewed from above.
FIG. 3 is a bottom view showing a shape in which the rotary electric apparatus of FIG. 1 as viewed from below.
FIG. 4 is a conceptual view showing a shape in which the hairpins of a stator coil in FIG. 1 are identically configured for each layer regardless of type.
FIG. 5 is a cross-sectional view showing a shape in which a plurality of conductors are accommodated in two slots for each pole and each phase in FIG. 1.
FIG. 6 is a conceptual view showing a wiring structure of four parallel circuits for a U-phase according to the present disclosure.
FIG. 7 is a conceptual view showing a wiring structure of a plurality of parallel circuits for each layer according to the present disclosure.
FIG. 8 is a conceptual view showing a wiring diagram of first and second parallel circuits for a U-phase according to the present disclosure.
FIG. 9 is a conceptual view showing a wiring diagram of third and fourth parallel circuits for a-U phase according to the present disclosure.
FIG. 10 is a graph of a waveform showing an amount of interlinkage magnetic flux of an unbalanced parallel circuit in the related art.
FIG. 11 is a graph of a waveform showing an amount of interlinkage magnetic flux of an unbalanced parallel circuit in the present disclosure.

### Mode for the Invention

Hereinafter, the embodiments disclosed herein will be described in detail with reference to the accompanying drawings, and the same or similar elements are designated with the same numeral references regardless of the numerals in the drawings and a redundant description thereof will be omitted. A suffix "module" and "unit" used for constituent elements disclosed in the following description is merely intended for easy description of the specification, and the suffix itself does not give any special meaning or function. In describing an embodiment disclosed herein, moreover, the detailed description will be omitted when specific description for publicly known technologies to which the invention pertains is judged to obscure the gist of the present disclosure. Also, it should be understood that the accompanying drawings are merely illustrated to easily explain the concept of the invention, and therefore, they should not be construed to limit the technological concept disclosed herein by the accompanying drawings, and the concept of the present disclosure should be construed as being extended to all modifications, equivalents, and substitutes included in the concept and technological scope of the invention.

The terms including an ordinal number such as first, second, etc. can be used to describe various elements, but the elements should not be limited by those terms. The terms are used merely for the purpose to distinguish an element from the other element.

In case where an element is "connected" or "linked" to the other element, it may be directly connected or linked to the other element, but another element may be existed therebetween. On the contrary, in case where an element is "directly connected" or "directly linked" to another element, it should be understood that any other element is not existed therebetween.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

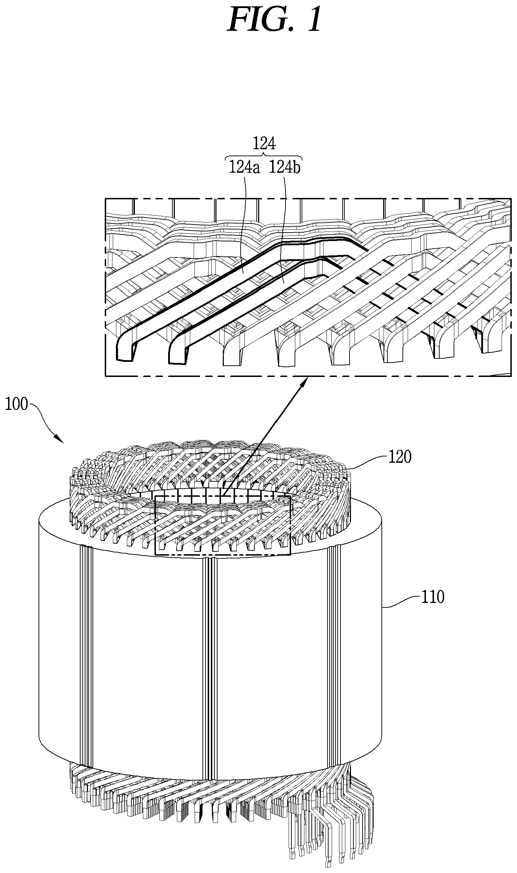

FIG. 1 is a conceptual view showing a rotary electric apparatus of an 8-pole, 48-slot 113, 8-layer model according to the present disclosure.

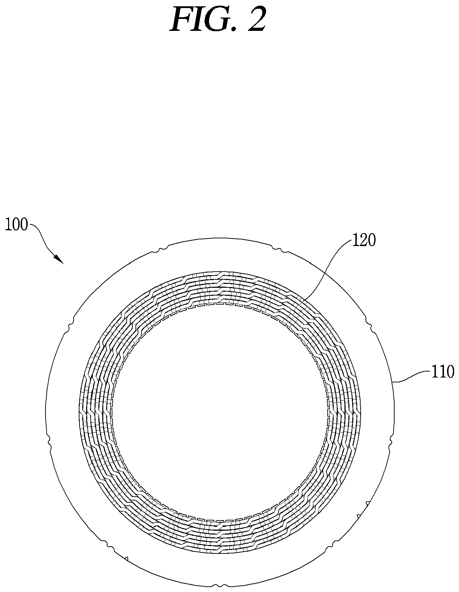

FIG. 2 is a plan view showing a shape in which the rotary electric apparatus of FIG. 1 as viewed from above.

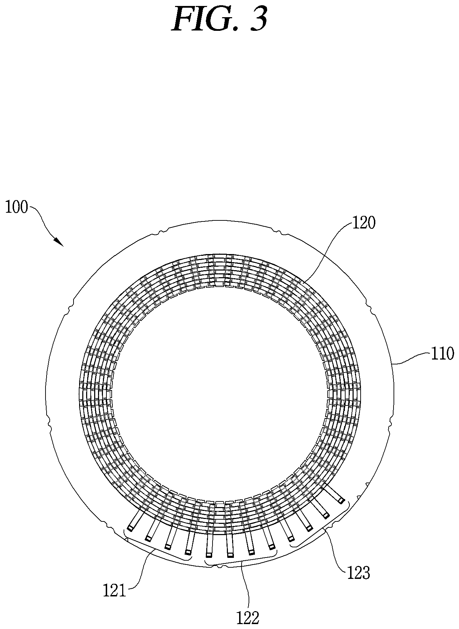

FIG. 3 is a bottom view showing a shape in which the rotary electric apparatus of FIG. 1 as viewed from below.

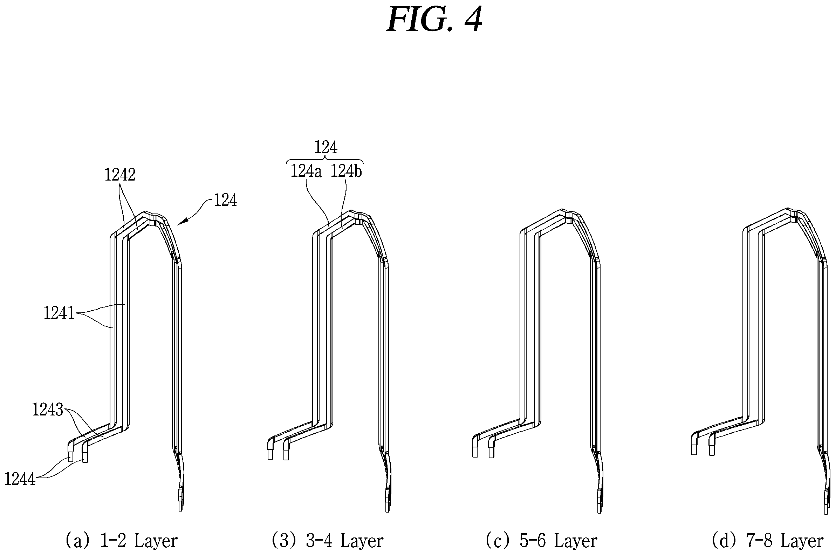

FIG. 4 is a conceptual view showing the shape of conductors 124a, 124b that are identically configured for each layer regardless of hairpin types of a stator coil 120 in FIG. 1.

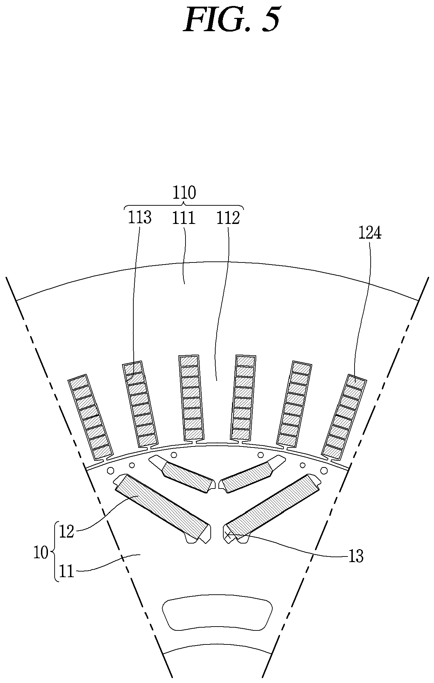

FIG. 5 is a cross-sectional view showing a shape in which a plurality of conductors 124 are accommodated in two slots 113 for each pole and each phase in FIG. 1.

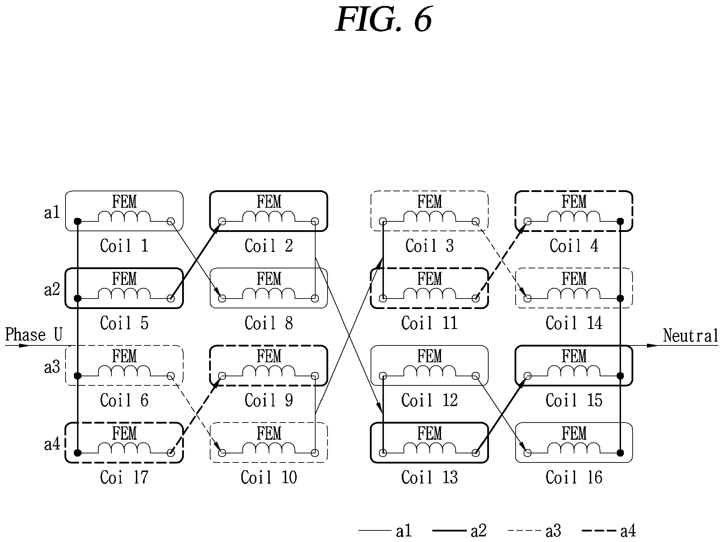

FIG. 6 is a conceptual view showing a wiring structure of four parallel circuits for a U-phase according to the present disclosure.

The rotary electric apparatus according to the present disclosure includes a stator 100 and a rotor 10.

The stator 100 includes a stator core 110 and a stator coil 120.

The stator core 110 may be defined in a cylindrical shape by stacking a plurality of thinly formed electrical steel sheets in a circular shape and combining them in an axial direction (thickness direction).

The stator core 110 includes a base 111, a rotor accommodating hole, a plurality of teeth 112, and a plurality of slots 113.

The base 111 defines an exterior of the stator core 110. A rotor accommodating hole may be disposed inside the base 111.

The plurality of teeth 112 are disposed to protrude in a radial direction from an inside of the base 111 toward the center of the rotor accommodating hole.

The plurality of slots 113 are disposed between the plurality of teeth 112, and disposed to pass therethrough along an axial direction of the base 111. The plurality of teeth 112 are alternately arranged along a circumferential direction.

The plurality of slots 113 may be respectively disposed to extend in a radial direction from an inside of the base 111 toward the rotor accommodating hole.

Each of the plurality of slots 113 is configured to accommodate a conductor 124 having a rectangular cross-sectional shape.

Each of the plurality of slots 113 may be defined in a rectangular shape. The plurality of conductors 124 may be disposed to be stacked in a radial direction in a single slot 113.

A width of the slot 113 may be the same as or similar to a horizontal length of a single conductor 124, and a length of the slot 113 may be equal to or similar to a sum of the vertical lengths of the plurality of conductors 124.

Accordingly, the plurality of conductors 124 may be disposed to be stacked in a column in the single slot 113.

A pole shoe may be disposed to protrude in a circumferential direction at an inner end of the tooth 112. The pole shoe may prevent the conductor 124 from being released to an inside of the rotor accommodating hole.

The plurality of slots 113 may be respectively disposed to extend in a radially outward direction from an inside of the stator core 110, and configured to have a first layer to an N-th layer. N is a natural number greater than or equal to 2. In the present embodiment, it is shown a shape in which the plurality of layers are configured with first to eighth layers.

A single conductor 124 may be accommodated in each layer.

The plurality of slots 113 may be disposed to be spaced apart from one another in a circumferential direction of the stator core 110, and may be configured with a first slot 113 to an M-th slot 113. In the present embodiment, it is shown that the plurality of slots 113 are configured with first to 48th slots 113.

A rotor accommodating hole 117 is disposed to pass through the rotor 10 along an axial direction to accommodate the rotor 10 at an inner center of the stator 100, and the rotor 10 is disposed to rotate about a rotation shaft with a predetermined air gap with respect to the stator core 110.

The rotor 10 may include a rotor core 11 and a plurality of permanent magnets 12. A plurality of permanent magnet accommodating holes 13 may be disposed in the rotor core 11. A plurality of permanent magnets 12 are accommodated in the plurality of permanent magnet accommodating holes 13.

The plurality of permanent magnets 12 may be defined in a flat plate shape. The plurality of permanent magnets 12 may be symmetrically disposed on both left and right sides with respect to a radial center line passing in a radial direction through the center of the rotor core 11.

The plurality of permanent magnets 12 may be disposed to be inclined at different angles with respect to the radial center line. The plurality of permanent magnets 12 may be disposed to be spaced apart from one another in a radial direction.

The rotor 10 may include a plurality of permanent magnets 12 to have a plurality of polarities in a circumferential direction. For example, the plurality of polarities may include N-poles and S-poles, and the N-poles and the S-poles may be alternately arranged in a circumferential direction.

The plurality of permanent magnets 12 may be configured to have a single polarity.

In the present embodiment, the rotor 10 may be configured to have 8 poles.

The stator coil 120 may be wound around the stator core 110 by electrically connecting the plurality of conductors 124 to one another. The plurality of conductors 124 may be respectively wrapped with an insulating paper or an insulating coating agent to be insulated from one another.

The stator coil 120 may be configured by connecting a plurality of hairpin-type conductors 124.

The hairpin-type conductor 124 may have a rectangular cross-sectional shape and may be defined to have a larger length compared to the horizontal and vertical lengths of the cross-section.

Both sides of the hairpin-type conductor 124 is configured to be inserted into different slots 113.

The hairpin-type conductor 124 may be formed by bending an elongated bar (or rod) having a rectangular cross-sectional shape in a "U" shape.

The hairpin-type conductor 124 may include an insertion portion 1241, a crossover portion 1242, a bending portion 1243, and a conductive portion 1244.

The insertion portion 1241, which is a portion of the conductor 124, is configured to extend in a straight line along the slot 113 so as to be inserted into the slot 113. The insertion portion 1241 may be configured in plurality.

The plurality of insertion portions 1241 may be accommodated in two different slots 113 at a preset slot pitch interval.

The slot pitch refers to an interval (distance) between the plurality of slots 113. For example, 1-slot pitch refers to an interval between two slots 113 is 1. More specifically, 1-slot pitch denotes that an interval between two slots 113 is equal to a width of a single tooth 112.

Furthermore, m-slot pitch, which is a distance between a first slot 113 and a (m+1)-th slot 113, denotes that m teeth 112 and (m-1) slots 113 are alternately arranged in a repeated manner along a circumferential direction.

A length of the insertion portion 1241 is the same as or similar to a stacked length or an axial length of the stator core 110.

The crossover portion 1242 is configured to connect one end of each of the plurality of insertion portions 1241.

A length of the crossover portion 1242 is configured to correspond to an interval between the plurality of insertion portions 1241 respectively inserted into different slots 113, that is, a slot pitch of the two insertion portions 1241.

One end portion of the crossover portion 1242 is connected to one end of one insertion portion 1241 of the two insertion portions 1241, and the other end portion of the crossover portion 1242 is connected to one end of the other insertion portion 1241 of the two insertion portions 1241.

Both end portions of the crossover portion 1242 may be disposed adjacent to one end portion of the slot 113, and a central portion of the crossover portion 1242 may be disposed in an axial direction apart from one end portion of the slot 113.

Both sides of the crossover portion 1242 may be disposed to be inclined toward one end portion of the slot 113 from the central portion of the crossover portion 1242. Both sides of the crossover portion 1242 may be disposed symmetrically left and right with respect to an axial center line passing the central portion of the crossover portion 1242 in an axial direction.

The bending portion 1243 may extend from the other end of the insertion portion 1241 and may be primarily bent to be inclined at a predetermined angle.

The bending portion 1243 may be configured in plurality to extend from the two insertion portions 1241 of a single conductor 124, respectively.

The plurality of bending portion 1243 may respectively extend to have the same length as one another.

The plurality of bending portions 1243 may be respectively bent to be inclined in opposite directions to each other.

The bending portion 1243 is configured to connect two different conductors 124 to each other. The bending portion 1243 may extend to a half distance (1/2) of an interval between the two different conductors 124.

The conductive portion 1244 is secondarily bent to extend in a stacking direction or an axial direction of the stator core 110 from the bending portion 1243. The conductive portion 1244, which is a portion from which the insulating coating of the conductor 124 is removed, is configured to electrically connect the plurality of conductors 124.

The conductive portion 1244 are configured in plurality to extend from the two bending portions 1243 of the single conductor 124, respectively.

The plurality of conductive portions 1244 may be respectively connected to be in contact with the conductive portions 1244 of the two conductors 124 different from each other, thereby allowing the two conductors 124 to be conductive.

For example, the two conductors 124 may be spaced apart from each other at a predetermined interval in a circumferential direction of the stator core 110, and the conductive portion 1244 of one conductor 124 and the conductive portion 1244 of the other conductor 124 for the two conductors 124 may be disposed and welded to overlap each other in a radial direction of the stator core 110 so as to be electrically connected to each other.

The plurality of conductors 124 may be divided into a long slot pitch conductor 124a having a long slot pitch interval (e.g., 7-slot pitch) and a short slot pitch conductor 124b having a short slot pitch interval (e.g., 5-slot pitch) (see FIG. 4).

The stator coil 120 may include a plurality of phase coils respectively connected to the phases of the power source.

The plurality of phase coils may respectively have a first phase coil, a second phase coil, and a third phase coil. The first-phase coil may be a U-phase coil, the second-phase coil may be a V-phase coil, and the third-phase coil may be a W-phase coil.

However, the U-phase coil 121, the V-phase coil 122, and the W-phase coil 123 are respectively wired with the same winding pattern, and therefore, the U-phase coil 121 will be described as an example.

The stator coil 120 may be configured to have a plurality of parallel circuits in two slots 113 or more slots 113 for each pole and each phase. In the present embodiment, it is shown a shape in which the stator coil 120 is configured with a plurality of parallel circuits in two slots 113 for each pole and each phase.

In the present embodiment, the rotary electric apparatus is a 3-phase, 8-pole, 48-slot 113, 8-layer model.

Since the rotary electric apparatus has eight poles, the number of slots 113 for each pole (a single pole) is six (48 slots 113 / 8 poles = 6 slots 113 / one pole).

Since the rotary electric apparatus has three phases, the number of slots 113 for each pole and each phase (one phase) is two (6 slots 113 / 3 phases = 2 slots 113 / one phase).

Two or more parallel circuits may be configured in two slots 113 for each pole and each phase.

The plurality of parallel circuits may be configured as an even number.

Two parallel circuits may be configured as a pair.

In the present embodiment, the stator coil 120 may be configured with four parallel circuits for each phase.

For example, each of the U-phase coil, V-phase coil, and W-phase coil may be configured with first to fourth parallel circuits a1, a2, a3, a4.

A plurality of conductors 124 constituting each parallel circuit may be connected to one another in series.

A plurality of parallel circuits may be wound in pairs by two.

The first parallel circuit a1 and the second parallel circuit a2 may be wound to cross each other while constituting a pair.

The third parallel circuit a3 and the fourth parallel circuit a4 may be wound to cross each other while constituting a pair.

A pair of first and second parallel circuits a1, a2 and the other pair of third and fourth parallel circuits a3, a4 may be wound to cross each other.

Here, being wound to cross each other may be understood to denote that the plurality of conductors 124 constituting each parallel circuit are connected to each other while changing the slots 113 and layers to cross each other.

The plurality of conductors 124 constituting each parallel circuit may include a lead wire 125, a neutral wire 126, a standard wire, and a jump wire 127.

The lead wire 125 is a conductor 124 into which a current is drawn. The neutral wire 126 is the conductor 124 from which a current is drawn. The standard wire is a conductor 124 provided between the lead wire 125 and the neutral wire 126 to connect them.

The jump wire 127 is a conductor 124 connecting the plurality of conductors 124 located in different layers.

Hereinafter, a wiring structure of the stator coil 120 provided with the first to fourth parallel circuits a1, a2, a3, a4 for each phase according to the present disclosure will be described.

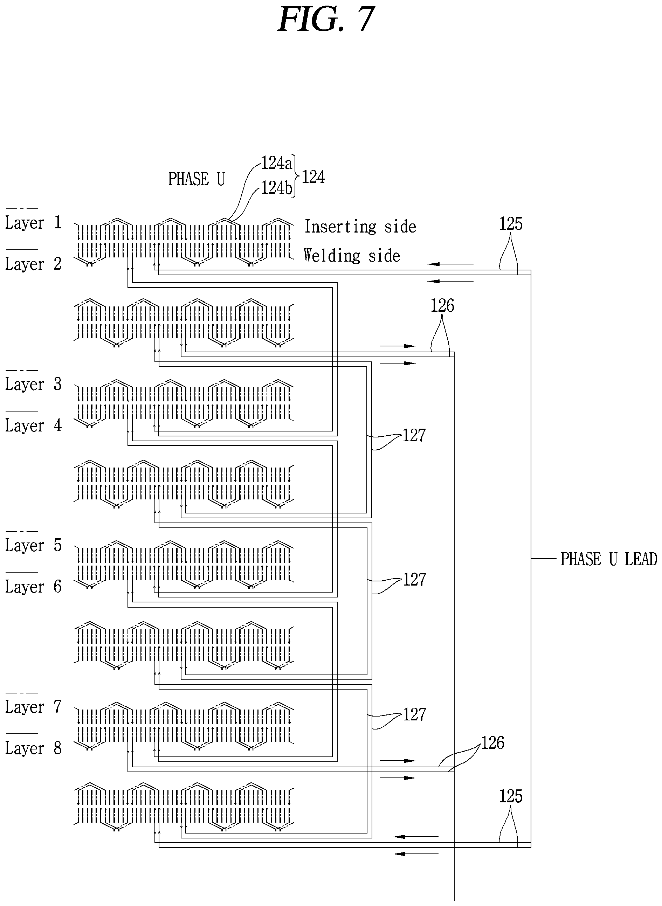

FIG. 7 is a conceptual view showing a wiring structure of a plurality of parallel circuits for each layer according to the present disclosure.

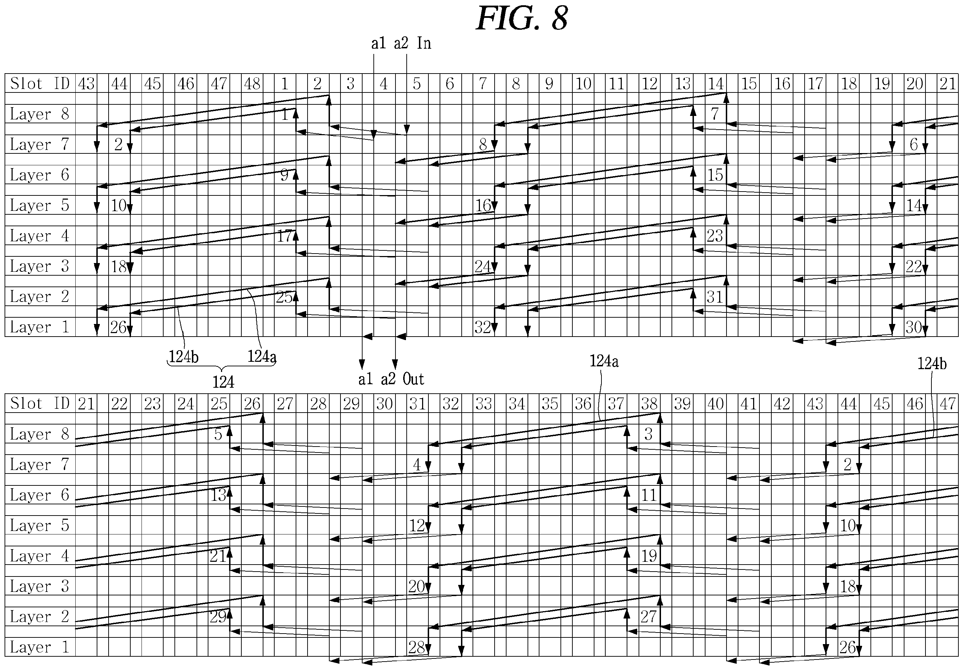

FIG. 8 is a conceptual view showing a wiring diagram of first and second parallel circuits a1, a2 for a U-phase according to the present disclosure.

Each of the first parallel circuit a1 and the second parallel circuit a2 may include a first conductor 124 to a K-th conductor 124. K is a natural number greater than or equal to 2.

A current is drawn into the first conductor 124 based on a direction in which the current flows, and a current is drawn from the K-th conductor. The current moves in order from the first conductor 124 to the K-th conductor 124.

The first parallel circuit a1 and the second parallel circuit a2 may be respectively wound in a wave winding shape while constituting a pair.

Being wound in a wave winding shape denotes that winding is carried out in one direction (circumferential, clockwise, or counterclockwise) in a wave shape.

The first parallel circuit a1 and the second parallel circuit a2 may be disposed at a 1-slot pitch interval from each other.

In each of the first parallel circuit a1 and the second parallel circuit a2, a current may be drawn into the eighth layer, which is an outermost layer, and may be drawn from the first layer, which is an innermost layer.

The first conductor 124 to the K-th conductor 124 constituting the first parallel circuit a1 may be spaced apart from one another at a preset slot pitch interval in a circumferential direction and may be connected in series. The preset slot pitch may be a 6-slot pitch.

The preset slot pitch may be a total number of slots / a number of poles = 48 slots / 8 poles = 6 slots / pole. The preset slot pitch may also be referred to as a regular pitch.

For example, the first conductor 124 and the second conductor 124 may be spaced apart from each other at a 6-slot pitch interval.

The first conductors 124 to K-th conductor 124 constituting the first parallel circuit a1 may be respectively connected in series by alternating the first insertion portion 1241 and the second insertion portion 1241 on both sides with different slot pitches in circumferential direction.

The different slot pitches may be a first slot pitch and a second slot pitch. The first slot pitch may be a long pitch that is 1-slot pitch larger than a regular pitch of 6-slot pitch. The first slot pitch may be a 7-slot pitch.

The second slot pitch may be a short pitch that is 1-slot pitch smaller than the regular pitch of 6-slot pitch. The second slot pitch may be a 5-slot pitch.

For example, the first parallel circuit a1 may have the following wiring structure.

The first conductor 124 may be connected to the lead wire 125 to allow a current to be drawn into the first conductor 124.

The first insertion portion 1241 of the first conductor 124 is inserted into the eighth layer of the first slot 113, and the second insertion portion 1241 of the first conductor 124 is inserted into the seventh layer of the 44th slot 113 in a first circumferential direction. The first insertion portion 1241 and the second insertion portion 1241 of the first conductor 124b are spaced apart from each other at a 5-slot pitch interval, which is a short pitch. The first circumferential direction is a direction in which a slot 113 number decreases.

The slot 113 number is assigned to each slot 113 for convenience of description.

The first insertion portion 1241 and the second insertion portion 1241 of the first conductor 124b are accommodated in the eighth layer and the seventh layer, respectively, at a 5-slot pitch (short pitch) interval. The crossover portion 1242 of the first conductor 124 may extend by a distance of 5-slot pitch.

The second conductor 124a is connected in series with the first conductor 124b at a 6-slot pitch (regular pitch) interval. The bending portion 1243 of the first conductor 124b and the bending portion 1243 of the second conductor 124a extend in opposite directions toward each other by a distance of 3-slot pitch, respectively, and the conductive portion 1244 of the first conductor 124b and the conductive portion 1244 of the second conductor 124a may be connected to each other by welding.

The first insertion portion 1241 of the second conductor 124a is inserted into the eighth layer of the 38th slot 113, and the second insertion portion 1241 of the second conductor 124a is inserted into the seventh layer of the 31st slot 113. The first insertion portion 1241 and the second insertion portion 1241 of the second conductor 124a are spaced apart from each other at a 7-slot pitch interval, which is a long pitch.

The first insertion portion 1241 and the second insertion portion 1241 of the second conductor 124a are accommodated in the eighth layer and the seventh layer, respectively, at a 7-slot pitch (long pitch) interval. The crossover portion 1242 of the second conductor 124a may extend by a distance of 7-slot pitch.

The third conductor 124b is connected in series with the second conductor 124a at a 6-slot pitch (regular pitch) interval. The bending portion 1243 of the second conductor 124a and the bending portion 1243 of the third conductor 124b extend in opposite directions toward each other by a distance of 3-slot pitch, respectively, and the conductive portion 1244 of the second conductor 124a and the conductive portion 1244 of the third conductor 124b may be connected to each other by welding.

The first insertion portion 1241 of the third conductor 124b is inserted into the eighth layer of the 25th slot 113, and the second insertion portion 1241 of the third conductor 124b is inserted into the seventh layer of the 20th slot 113. The first insertion portion 1241 and the second insertion portion 1241 of the third conductor 124b are spaced apart from each other at a 5-slot pitch interval, which is a short pitch.

The first insertion portion 1241 and the second insertion portion 1241 of the third conductor 124b are accommodated in the eighth layer and the seventh layer, respectively, at a 5-slot pitch (short pitch) interval. The crossover portion 1242 of the third conductor 124b may extend by a distance of 5-slot pitch.

The fourth conductor 124a is connected in series with the third conductor 124b at a 6-slot pitch (regular pitch) interval. The bending portion 1243 of the third conductor 124b and the bending portion 1243 of the fourth conductor 124a extend in opposite directions toward each other by a distance of 3-slot pitch, respectively, and the conductive portion 1244 of the third conductor 124b and the conductive portion 1244 of the fourth conductor 124a may be connected to each other by welding.

The first insertion portion 1241 of the fourth conductor 124a is inserted into the eighth layer of the 14th slot 113, and the second insertion portion 1241 of the fourth conductor 124a is inserted into the seventh layer of the seventh slot 113. The first insertion portion 1241 and the second insertion portion 1241 of the fourth conductor 124a are spaced apart from each other at a 7-slot pitch interval, which is a long pitch.

The first insertion portion 1241 and the second insertion portion 1241 of the fourth conductor 124a are accommodated in the eighth layer and the seventh layer, respectively, at a 7-slot pitch (long pitch) interval. The crossover portion 1242 of the fourth conductor 124a may extend by a distance of 7-slot pitch.

The fifth conductor 124b is connected in series with the fourth conductor 124a at a 6-slot pitch (regular pitch) interval. The bending portion 1243 of the fourth conductor 124a and the bending portion 1243 of the fifth conductor 124b extend in opposite directions toward each other by a distance of 5-slot pitch, respectively, and the conductive portion 1244 of the fourth conductor 124a and the conductive portion 1244 of the fifth conductor 124b may be connected to each other by welding.

The first insertion portion 1241 of the fifth conductor 124b is inserted into the sixth layer of the first slot 113, and the second insertion portion 1241 of the fifth conductor 124b is inserted into the fifth layer of the 44th slot 113. The first insertion portion 1241 and the second insertion portion 1241 of the fifth conductor 124b are spaced apart from each other at a 5-slot pitch interval, which is a short pitch.

The first insertion portion 1241 and the second insertion portion 1241 of the fifth conductor 124b are accommodated in the sixth layer and the fifth layer, respectively, at a 5-slot pitch (short pitch) interval. The crossover portion 1242 of the fifth conductor 124b may extend by a distance of 5-slot pitch.

The sixth conductor 124a to the eighth conductor 124a are respectively different from the second conductor 124a to the fourth conductor 124a in that the first and second insertion portions 1241 are inserted into the sixth and fifth layers, respectively.

However, the sixth conductor 124a to the eighth conductor 124a are the same as the second conductor 124a to the fourth conductor 124a in that the first and second insertion portions 1241 are disposed to be spaced apart by alternating long pitch and short pitch intervals, and are connected in series with each other, and thus a detailed description thereof will be omitted.

The ninth conductor 124b to the 12th conductor 124a are respectively different from the first conductor 124b to the fourth conductor 124a in that the first and second insertion portions 1241 are inserted into the fourth and third layers, respectively.

However, the ninth conductor 124b to the 12th conductor 124a are the same as the first conductor 124 to the fourth conductor 124 in that the first and second insertion portions 1241 are disposed to be spaced apart by alternating short pitch and long pitch intervals, and are connected in series with each other, and thus a detailed description thereof will be omitted.

The 13th conductor 124b to the 16th conductor 124a are different from the first conductor 124 to the fourth conductor 124 in that the first and second insertion portions 1241 are inserted into the second and first layers, respectively.

However, the 13th conductor 124b to the 16th conductor 124a are the same as the first conductor 124b to the fourth conductor 124a in that the first and second insertion portions 1241 are disposed to be spaced apart by alternating short pitch and long pitch intervals, and are connected in series with each other, and thus a detailed description thereof will be omitted.

The 16th conductor 124a may be connected to the neutral wire 126 to allow a current to be drawn from the 16th conductor 124.

The fourth conductor 124a and the fifth conductor 124b, the eighth conductor 124a and the ninth conductor 124b, and the 12th conductor 124a and the 13th conductor 124b are respectively connected to each other by the jump wire 127.

A group of the first conductor 124b to the fourth conductor 124a, a group of the fifth conductor 124b to the eighth conductor 124a, a group of the ninth conductor 124b to the 12th conductor 124a, and a group of the 13th conductor 124b to the 16th conductors 124a are respectively wired in series in the same pattern for each layer, that is, in the seventh-eighth layers, the fifth-sixth layers, the third-fourth layers, and the first-second layers, respectively.

The second parallel circuit a2 is different from the first parallel circuit a1 in that it is disposed to be spaced apart from the first parallel circuit a1 at a 1-slot pitch interval in a circumferential direction in the same layer.

However, the second parallel circuit a2 is the same as the first parallel circuit a1 in that the first conductor 124 to L-th conductor 124 constituting the second parallel circuit a2 are respectively connected in series by alternating the first insertion portion 1241 and the second insertion portion 1241 on both sides with different slot pitches in a circumferential direction, a redundant description of other configurations will be omitted.

In the case of a 3-phase 8-pole 48-slot 113 model, a total of 16 standard-type conductors 124 may constitute the first parallel circuit a1 and the second parallel circuit a2, respectively. The number of conductors 124 of the first and second parallel circuits a1, a2 is 32 in total.

The standard-type conductors 124 constituting the first parallel circuit a1 and the second parallel circuit a2, respectively, may be connected in series by four in the same layer, that is, one of the eighth-seventh, the sixth-fifth, the fourth-third, and the second-first layers, and may be connected in series in a first circumferential direction while changing by two layers from an outermost layer to an innermost layer for each rotation.

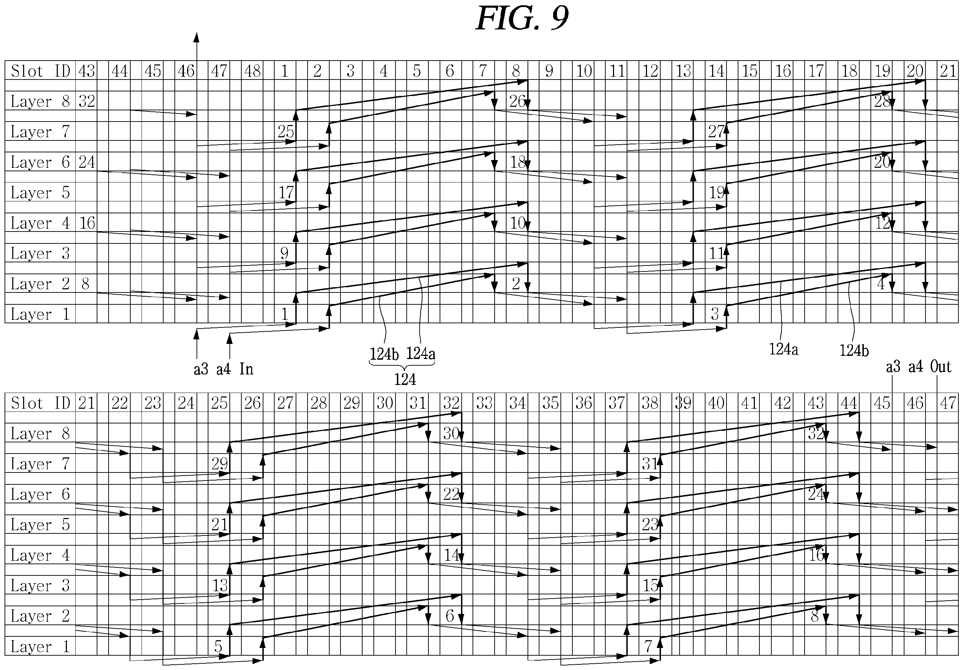

FIG. 9 is a conceptual view showing a wiring diagram of third and fourth parallel circuits a3, a4 for a U-phase according to the present disclosure.

In the present embodiment, the third parallel circuit a3 and the fourth parallel circuit a4, which constitute a pair, are different from the circuit a1 and the second parallel circuit a2 in that a direction of current flow is opposite to that of the first and second parallel circuits a1 and a2.

The third parallel circuit a3 and the fourth parallel circuit a4 are configured such that a current flows in a second circumferential direction (a direction in which the slot 113 number increases, counterclockwise) and from an innermost side to an outermost side in a radial direction.

In the case of the third parallel circuit a3, the first insertion portion 1241 and the second insertion portion 1241 of the first conductor 124 are respectively inserted into the first layer of the first slot 113 and the second layer of the eighth slot 113.

A current flows in a second circumferential direction (first slot 113 -> eighth slot 113) and radial outward direction (first layer -> second layer) along the first conductor 124.

The first conductor 124a to the fourth conductor 124b are respectively spaced apart from one another at a regular pitch in a second circumferential direction in the same layer, that is, the first-second layers, and are connected in series.

The first and second insertion portions 1241 of each of the first conductor 124a to the fourth conductor 124b are spaced apart by alternating a first slot pitch (long pitch) and a second slot pitch (short pitch), which are different from each other, toward a second circumferential direction in the first-second layers.

The fifth conductor 124a to the eighth conductor 124b are respectively spaced apart from one another at a regular pitch in a second circumferential direction in the third-fourth layers, and are connected in series.

The first and second insertion portions 1241 of each of the fifth conductor 124a to the eighth conductor 124b are spaced apart by alternating a first slot pitch (long pitch) and a second slot pitch (short pitch), which are different from each other, toward a second circumferential direction in the third-fourth layers.

The ninth conductor 124a to the 12th conductor 124b are respectively spaced apart from one another at a regular pitch in a second circumferential direction in the fifth-sixth layers, and are connected in series.

The first and second insertion portions 1241 of each of the ninth conductor 124a to the 12th conductor 124b are spaced apart by alternating a first slot pitch (long pitch) and a second slot pitch (short pitch), which are different from each other, toward a second circumferential direction in the fifth-sixth layers.

The 13th conductor 124a to the 16th conductor 124b are respectively spaced apart from one another at a regular pitch in a second circumferential direction in the seventh-eighth layers, and are connected in series.

The 13th and 16th insertion portions 1241 of each of the ninth conductor 124a to the 12th conductor 124b are spaced apart by alternating a first slot pitch (long pitch) and a second slot pitch (short pitch), which are different from each other, toward a second circumferential direction in the seventh-eighth layers.

The fourth parallel circuit a4 is different from the third parallel circuit a3 in that it is disposed to be spaced apart from the third parallel circuit a3 at a 1-slot pitch interval.

However, the third parallel circuit a3 and the fourth parallel circuit a4 are wired in the same pattern while constituting a pair.

In the case of the fourth parallel circuit a4, the first insertion portion 1241 of the first conductor 124 is inserted into the first layer of the second slot 113, and a current is drawn into the first conductor 124.

The third parallel circuit a3 draws a current from the eighth layer of the 43rd slot 113, and the fourth parallel circuit a4 draws a current from the eighth layer of the 44th slot 113.

The neutral wire 126 drawn from each of the first and second parallel circuits a1 and a2 may be connected in parallel with the neutral wire 126 drawn from the third and fourth parallel circuits a3, a4.

Hereinafter, the operation and effect of a wiring structure of a plurality of parallel circuits in each phase coil according to the present disclosure will be described.

The first parallel circuit a1 and the second parallel circuit a2 are connected in parallel while constituting a pair.

The first parallel circuit a1 and the second parallel circuit a2 are spaced apart from each other at a 1-slot pitch interval.

The first conductor 124 to K-th conductor 124 constituting the first parallel circuit a1 are spaced apart from one another at a regular slot pitch (6-slot pitch) interval and are connected in series.

The first, third, ..., and (2k-1)-th conductors 124b, which are odd-numbered conductors 124b, and the second, fourth, ..., and 2k-th conductors 124a, which are even-numbered conductors 124a, have different slot pitch intervals.

Both sides of the odd-numbered conductor 124b are accommodated in different layers with a short slot pitch (5-slot pitch) interval in a first circumferential direction.

The first insertion portion 1241 and the second insertion portion 1241 of the odd-numbered conductor 124b are accommodated in the N-th layer of the M-th slot 113 and the (N-1)-th layer of the (M-5)-th slot 113, respectively, and are spaced apart at a 5-slot pitch interval.

Both sides of the even-numbered conductor 124a are accommodated in different layers with a long slot pitch (7-slot pitch) interval in a first circumferential direction.

The first insertion portion 1241 and the second insertion portion 1241 of the even-numbered conductor 124a are accommodated in the N-th layer of the (M-11)-th slot 113 and the (N-1)-th layer of the (M-18)-th slot 113, respectively, and are spaced apart at a 7-slot pitch interval.

The second insertion portion 1241 of the odd-numbered conductor 124b accommodated in the (N-1)-th layer of the (M-5)-th slot 113 is connected to the first insertion portion 1241 of the even-numbered conductor 124a accommodated in the N-th layer of the (M-11)-th slot 113.

The second bending portion 1243 of the odd-numbered conductor 124b is primarily bent to extend in a first circumferential direction and a radially outward direction from the second insertion portion 1241 of the odd-numbered conductor 124a toward the first insertion portion 1241 of the even-numbered conductor 124b.

The first bending portion 1243 of the even-numbered conductor 124a is primarily bent to extend in a second circumferential direction and a radially inward direction from the first insertion portion 1241 of the even-numbered conductor 124a toward the odd-numbered second insertion portion 1241.

The second conductive portion 1244 that is secondarily bent at the second bending portion 1243 of the odd-numbered conductor 124b is electrically connected to the first conductive portion 1243 that is secondarily bent at the first bending portion 1243 of the even-numbered conductor 124a.

The first conductor 124a to L-th conductor 124 constituting the second parallel circuit a2 are spaced apart from one another at a regular slot pitch (6-slot pitch) interval and are connected in series.

The first, third, ..., and (2I -1)-th conductors 124a, which are odd-numbered conductors 124a, and the second, fourth, ..., and 2I-th conductors 124b, which are even-numbered conductors 124b, have different slot pitch intervals.

Both sides of the odd-numbered conductor 124a are accommodated in different layers with a long slot pitch (7-slot pitch) interval in a first circumferential direction.

The first insertion portion 1241 and the second insertion portion 1241 of the odd-numbered conductor 124a are accommodated in the N-th layer of the (M+1)-th slot 113 and the (N-1)-th layer of the (M-6)-th slot 113, respectively, and are spaced apart at a 7-slot pitch interval.

Both sides of the even-numbered conductor 124b are accommodated in different layers with a short slot pitch (5-slot pitch) interval in a first circumferential direction.

The first insertion portion 1241 and the second insertion portion 1241 of the even-numbered conductor 124b are accommodated in the N-th layer of the (M-12)-th slot 113 and the (N-1)-th layer of the (M-17)-th slot 113, respectively, and are spaced apart at a 5-slot pitch interval.

The second insertion portion 1241 of the odd-numbered conductor 124a accommodated in the (N-1)-th layer of the (M-6)-th slot 113 is connected to the first insertion portion 1241 of the even-numbered conductor 124b accommodated in the N-th layer of the (M-12)-th slot 113.

The second bending portion 1243 of the odd-numbered conductor 124a is primarily bent to extend in a first circumferential direction and a radially outward direction from the second insertion portion 1241 of the odd-numbered conductor 124a toward the first insertion portion 1241 of the even-numbered conductor 124b.

The first bending portion 1243 of the even-numbered conductor 124b is primarily bent to extend in a second circumferential direction and a radially inward direction from the first insertion portion 1241 of the even-numbered conductor 124b toward the odd-numbered second insertion portion 1241.

The second conductive portion 1244 that is secondarily bent at the second bending portion 1243 of the odd-numbered conductor 124a is electrically connected to the first conductive portion 1243 that is secondarily bent at the first bending portion 1243 of the even-numbered conductor 124b.

Here, an extension direction of the bending portion 1243 connecting the second insertion portion 1241 of the odd-numbered conductor 124 and the first insertion portion 1241 of the even-numbered conductor 124 of the first parallel circuit a1 and the conductive portion 1244 intersects with an extension direction of the bending portion 1243 connecting the second insertion portion 1241 of the odd-numbered conductor 124 and first insertion portion 1241 of the even-numbered conductor 124 of the second parallel circuit a2 and the conductive portion 1244.

The third parallel circuit a3 and the fourth parallel circuit a4 are connected in parallel while constituting a pair.

The first parallel circuit a3 and the second parallel circuit a4 are spaced apart from each other at a 1-slot pitch interval.

The first conductor 124 to P-th conductor 124 constituting the third parallel circuit a3 are spaced apart from one another at a regular slot pitch (6-slot pitch) interval and are connected in series.

The first, third, ..., and (2p -1)-th conductors 124a, which are odd-numbered conductors 124a, and the second, fourth, ..., and 2p-th conductors 124b, which are even-numbered conductors 124b, have different slot pitch intervals.

Both sides of the odd-numbered conductor 124a are accommodated in different layers with a long slot pitch (7-slot pitch) interval in a second circumferential direction.

The first insertion portion 1241 and the second insertion portion 1241 of the odd-numbered conductor 124a are accommodated in the N-th layer of the M-th slot 113 and the (N+1)-th layer of the (M+7)-th slot 113, respectively, and are spaced apart at a 7-slot pitch interval. Each of M and N is a natural number greater than or equal to 1.

Both sides of the even-numbered conductor 124b are accommodated in different layers with a short slot pitch (5-slot pitch) interval in a second circumferential direction.

The first insertion portion 1241 and the second insertion portion 1241 of the even-numbered conductor 124b are accommodated in the N-th layer of the (M+13)-th slot 113 and the (N+1)-th layer of the (M+18)-th slot 113, respectively, and are spaced apart at a 5-slot pitch interval.

The second insertion portion 1241 of the odd-numbered conductor 124a accommodated in the (N+1)-th layer of the (M+7)-th slot 113 is connected to the first insertion portion 1241 of the even-numbered conductor 124b accommodated in the N-th layer of the (M+13)-th slot 113.

The second bending portion 1243 of the odd-numbered conductor 124a is primarily bent to extend in a second circumferential direction and a radially inward direction from the second insertion portion 1241 of the odd-numbered conductor 124a toward the first insertion portion 1241 of the even-numbered conductor 124b.

The current value of the first power module 124a first bending portion 1243 of the even-numbered conductor 124b is primarily bent to extend in a second circumferential direction and a radially outward direction from the first insertion portion 1241 of the even-numbered conductor 124b toward the second insertion portion 1241 of the odd-numbered conductor 124a.

The second conductive portion 1244 that is secondarily bent at the second bending portion 1243 of the odd-numbered conductor 124a is electrically connected to the first conductive portion 1243 that is secondarily bent at the first bending portion 1243 of the even-numbered conductor 124.

The first conductor 124 to Q-th conductor 124 constituting the fourth parallel circuit a4 are spaced apart from one another at a regular slot pitch (6-slot pitch) interval and are connected in series.

The first, third, ..., and (2q-1)-th conductors 124b, which are odd-numbered conductors 124b, and the second, fourth, ..., and 2q-th conductors 124a, which are even-numbered conductors 124a, have different slot pitch intervals.

Both sides of the odd-numbered conductor 124b are accommodated in different layers with a short slot pitch (5-slot pitch) interval in a second circumferential direction.

The first insertion portion 1241 and the second insertion portion 1241 of the odd-numbered conductor 124b are accommodated in the N-th layer of the (M+1)-th slot 113 and the (N+1)-th layer of the (M+6)-th slot 113, respectively, and are spaced apart at a 5-slot pitch interval.

Both sides of the even-numbered conductor 124a are accommodated in different layers with a long slot pitch (7-slot pitch) interval in a second circumferential direction.

The first insertion portion 1241 and the second insertion portion 1241 of the even-numbered conductor 124a are accommodated in the N-th layer of the (M+12)-th slot 113 and the (N+1)-th layer of the (M+19)-th slot 113, respectively, and are spaced apart at a 7-slot pitch interval.

The second insertion portion 1241 of the odd-numbered conductor 124b accommodated in the (N+1)-th layer of the (M+6)-th slot 113 is connected to the first insertion portion 1241 of the even-numbered conductor 124a accommodated in the N-th layer of the (M+12)-th slot 113.

The second bending portion 1243 of the odd-numbered conductor 124b is primarily bent to extend in a second circumferential direction and a radially inward direction from the second insertion portion 1241 of the odd-numbered conductor 124b toward the first insertion portion 1241 of the even-numbered conductor 124a.

The first bending portion 1243 of the even-numbered conductor 124a is primarily bent to extend in a first circumferential direction and a radially outward direction from the first insertion portion 1241 of the even-numbered conductor 124a toward the odd-numbered second insertion portion 1241.

The second conductive portion 1244 that is secondarily bent at the second bending portion 1243 of the odd-numbered conductor 124b is electrically connected to the first conductive portion 1243 that is secondarily bent at the first bending portion 1243 of the even-numbered conductor 124a.

Here, an extension direction of the bending portion 1243 connecting the second insertion portion 1241 of the odd-numbered conductor 124a and the first insertion portion 1241 of the even-numbered conductor 124b of the third parallel circuit a3 and a welding portion intersects with an extension direction of the bending portion 1243 connecting the second insertion portion 1241 of the odd-numbered conductor 124b and the first insertion portion of the even-numbered conductor 124a of the fourth parallel circuit a4 and a welding portion.

In addition, each of the first and second parallel circuits a1, a2 is wound toward an innermost layer from an outermost layer of the first slot 113 and the second slot 113 in a direction (first circumferential direction) in which the slot 133 number decreases, and each of the third and fourth parallel circuits a3, a4 is wound toward an outermost layer from an innermost layer of the first slot 113 and the second slot 113 in a direction (second circumferential direction) in which the slot 133 number increases

According to this configuration, a plurality of conductors 124 constituting each of a plurality of parallel circuits may be configured with two types of hairpin-type conductors 124 having different slot pitches, that is, a long slot pitch and a short slot pitch, and the two types of hairpin-type conductors 124 may be alternately arranged along a circumferential direction in all layers, and wired in directions crossing each other, thereby allowing the plurality of conductors 124 constituting each parallel circuit to be evenly distributed in all slots 113 and layers to constitute a balanced parallel circuit.

Therefore, according to the present disclosure, in a balanced parallel circuit, an amount of interlinkage magnetic flux of each parallel circuit may be the same, and a current may flow in a balanced manner along a plurality of parallel circuits.

Furthermore, an impedance of each parallel circuit may be defined uniformly.

Moreover, a current may flow evenly to each parallel circuit, thereby solving a problem in that a heat generation phenomenon of a specific coil occurs due to the bias of the current.

Besides, a current may flow evenly in each parallel circuit, thereby facilitating control during a high-speed operation.

Additionally, a current may flow in a balanced manner in each parallel circuit to evenly generate a torque in each parallel circuit, thereby minimizing electromagnetic noise and vibration.

Moreover, two types of hairpin-type coils provided with a conductor 124a having a long slot pitch and a conductor 124a having a short slot pitch may be applicable to all layers to reduce the number of types of hairpins, thereby improving productivity and reducing manufacturing cost.

Besides, a long slot pitch and a short slot pitch, two types of hairpin-type conductors 124a, 124b, may be identically used for each layer, thereby simplifying the structure of a coil.

In addition, a lead wire 125 (lead line) into which a current is drawn, a neutral wire 126 (neutral line) from which the current is drawn, and a jump wire 127 connecting two conductors located in different layers may be intensively arranged in any one of four sections divided into four quarters of a circumference along a circumferential direction of the stator 100.

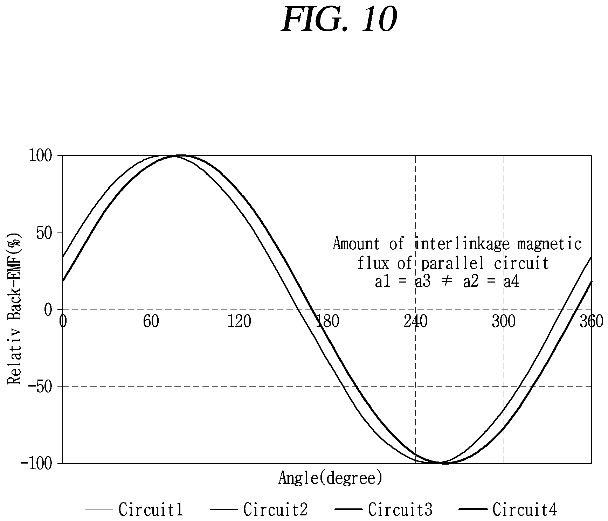

FIG. 10 is a graph of a waveform showing an amount of interlinkage magnetic flux of an unbalanced parallel circuit in the related art.

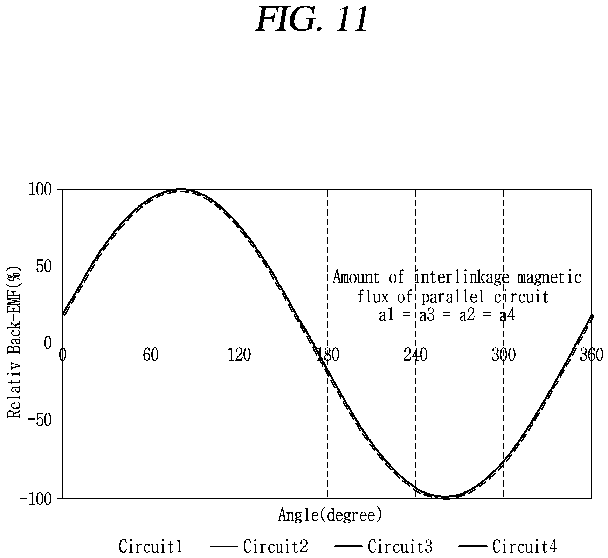

FIG. 11 is a graph of a waveform showing an amount of interlinkage magnetic flux of an unbalanced parallel circuit in the present disclosure.

In FIGS. 10 and 11, the X-axis is an angle (degree), and the Y-axis is relative back-EMF (relative back electromotive force; %).

Referring to FIG. 10 (the related art), amounts of interlinkage magnetic flux (a1 = a3 ≠ a2 = a4) of an unbalanced parallel circuit are different from one another.

Referring to FIG. 11 (the present disclosure), amounts of interlinkage magnetic flux (a1 = a3 = a2 = a4) of a balanced parallel circuit are the same.

## Claims

1. A stator comprising:
a stator core in which a plurality of slots for each pole and each phase are disposed to pass therethrough in an axial direction;
a stator coil wound around the stator core by connecting a plurality of conductors accommodated in the plurality of slots;
a first layer to an N-th layer extending from an innermost side to an outermost side of the slot in a radial direction to accommodate the plurality of conductors, respectively,
wherein the stator coil is configured with a plurality of parallel circuits for each pole and each phase, and
wherein the plurality of parallel circuits are configured to comprise:
a plurality of first conductors that constitute one of two parallel circuits, which are paired with each other, both sides of which are alternately accommodated in two slots, respectively, to be spaced apart at different slot pitches along a circumferential direction of the stator core and connected to one another; and
a plurality of second conductors that constitute the other one of the two parallel circuits, both sides of which are alternately accommodated in two slots, respectively, at different slot pitch intervals along the circumferential direction and connected to one another.

2. The stator of claim 1, wherein the first conductor and the second conductor are connected in parallel to constitute a pair at a 1-slot pitch interval from each other in a circumferential direction,
wherein both sides of the first conductor are connected to be spaced apart by alternating a preset first slot pitch interval and a second slot pitch interval that is a 2-slot pitch shorter than the first slot pitch interval, and
wherein both sides of the second conductor are connected to be spaced apart by alternating the second slot pitch interval and the first slot pitch interval.

3. The stator of claim 2, wherein the first slot pitch is a 7-slot pitch, and the second slot pitch is a 5-slot pitch.

4. The stator of claim 1, wherein the first conductor and the second conductor are respectively provided in plurality and connected in series, and
wherein a plurality of the first conductors or a plurality of the second conductors are spaced apart from each other at a 6-slot pitch interval.

5. The stator of claim 1, wherein the first conductor and the second conductor are wound through two slots for each pole and each phase.

6. The stator of claim 1, wherein both sides of each of the plurality of conductors are accommodated in and connected to different slots and different layers.

7. The stator of claim 1, wherein both sides of each of the plurality of conductors are respectively accommodated in and connected to two different layers having a difference of one layer from each other in different slots.

8. The stator of claim 1, wherein the stator core is configured with 8 poles, 48 slots, and 8 layers.

9. The stator of claim 1, wherein an even number of parallel circuits are provided.

10. The stator of claim 1, wherein the parallel circuit is configured with four parallel circuits,
wherein a first and a second parallel circuit, which are paired with each other, among the four parallel circuits, are drawn in from an outermost N-th layer and are drawn out to an innermost first layer, and
wherein a third parallel circuit and a fourth parallel circuit, which are paired with each other, among the four parallel circuits, are drawn in from the first layer and are drawn out to the N-th layer.

11. The stator of claim 1, wherein two parallel circuits, which are paired with each other, among the plurality of parallel circuits are respectively wound around the same layer in different slots,
wherein the first conductor and the second conductor are respectively spaced apart from each other at a predetermined slot pitch interval along a circumferential direction, and
wherein both sides of each of the first conductor and the second conductor are accommodated in two radially adjacent layers of two different slots, respectively, extended in a diagonal direction between the circumferential direction and the radial direction, and connected by moving two layers in the radial direction for every one rotation in the circumferential direction.

12. The stator of claim 1, wherein each of the plurality of conductors, both sides of which are disposed to be inserted into the two different slots, is configured as a hairpin type having the same shape for each layer.

13. The stator of claim 1, wherein each of the plurality of conductors comprises:
a plurality of insertion portions respectively inserted into the two slots;
a crossover portion connecting one end of each of the plurality of insertion portions;
a plurality of bending portions extending to protrude from the other end of each of the plurality of insertion portions to an outside of the slot, and being primarily bent; and
a conductive portion that is secondarily bent at each of the plurality of bending portions to electrically connect both end portions of the conductor.

14. The stator of claim 13, wherein a crossover portion of each of the first conductor and the second conductor extends in a diagonal direction between the circumferential direction and the radial direction.

15. The stator of claim 13, wherein respective bending portions of the first conductor and the second conductor are bent in directions crossing each other.

16. The stator of claim 1, wherein the plurality of parallel circuits are configured to comprise:
a first parallel circuit and a second parallel circuit drawn in to an outermost N-th layer of the slot, and drawn out from an innermost first layer of the slot, and wound in a first circumferential direction while constituting a pair; and
a third parallel circuit and a fourth parallel circuit drawn in to the innermost first layer of the slot, and drawn out from the outermost N-th layer of the slot, and wound in a second circumferential direction opposite to the first circumferential direction while constituting another pair.

17. A rotary electric apparatus comprising:
a housing;
a stator accommodated into the housing; and
a rotor mounted at inside of the stator to be rotatable with respect to the stator,
wherein the stator comprises:
a stator core in which a plurality of slots for each pole and each phase are disposed to pass therethrough in an axial direction;
a stator coil wound around the stator core by connecting a plurality of conductors accommodated in the plurality of slots; and
a first layer to an N-th layer extending from an innermost side to an outermost side of the slot in a radial direction to accommodate the plurality of conductors, respectively,
wherein the stator coil is configured with a plurality of parallel circuits for each pole and each phase, and
wherein the plurality of parallel circuits are configured to comprise:
a plurality of first conductors that constitute one of two parallel circuits, which are paired with each other, both sides of which are alternately accommodated in two slots, respectively, to be spaced apart at different slot pitches along a circumferential direction of the stator core and connected to one another; and
a plurality of second conductors that constitute the other one of the two parallel circuits, both sides of which are alternately accommodated in two slots, respectively, at different slot pitch intervals along the circumferential direction and connected to one another.
